# EUROPÄISCHE PATENTSCHRIFT

(11) **EP 4 051 857 B1**
(45) Veröffentlichungstag und Bekanntmachung des Hinweises auf die Patenterteilung: **12.07.2023**
(21) Anmeldenummer: 20797368.6
(22) Anmeldetag: 14.10.2020
(51) Int. Cl.: E05B 85/00, F16B 21/07, F16B 5/06

(54) **KRAFTFAHRZEUGTECHNISCHES CLIP-VERBINDUNGSELEMENT**
MOTOR VEHICLE CLIP CONNECTION ELEMENT
ÉLÉMENT DE RACCORDEMENT D'ATTACHE POUR VÉHICULE AUTOMOBILE

(30) Priorität: 29.10.2019 DE 102019129152
(43) Veröffentlichungstag der Anmeldung: 07.09.2022
(73) Patentinhaber: Kiekert AG, 42579 Heiligenhaus (DE)
(72) Erfinder: FAITL, Jan, 45219 Essen (DE); ÖZDOGAN, Murat, 42109 Wuppertal (DE); STEFFEN, Tobias, 45134 Essen (DE)
(86) Internationale Anmeldenummer: PCT/DE2020/100890
(87) Internationale Veröffentlichungsnummer: WO 2021/083452

(56) Entgegenhaltungen:
- DE-A1-102008 005 575
- US-A1- 2005 241 118
- US-A1- 2018 099 624

## Beschreibung

Die Erfindung betrifft ein kraftfahrzeugtechnisches Clip-Verbindungselement, insbesondere ein Clip-Verbindungselement zur Kopplung von Bauteilen eines Kraftfahrzeugschlosses, vorzugsweise eines Kraftfahrzeugtürschlosses, mit einem Spreizdorn sowie wenigstens zwei den Spreizdorn im Montagezustand rastend hintergreifenden Spreizflügeln.

Bei dem Kraftfahrzeugschloss handelt es sich bevorzugt um ein Kraftfahrzeugtürschloss. Generell kann das Kraftfahrzeugschloss aber auch als Klappenschloss wie Heckklappenschloss, Fronthaubenschloss, Tankklappenschloss etc. ausgebildet sein. Auch ein Schloss für eine Kraftfahrzeugsitzverriegelung kann entsprechend gestaltet werden. Überwiegend werden jedoch Kraftfahrzeugtürschlösser betrachtet.

Solche Kraftfahrzeugtürschlösser weisen in ihrem Innern ein Hebelwerk auf, bei dem es sich um ein Verriegelungshebelwerk oder auch ein Betätigungshebelwerk oder beides handeln kann. Einzelne Hebel des betreffenden Hebelwerkes werden dabei oftmals miteinander verbunden. Das kann drehfest oder drehgelenkig erfolgen.

In diesem Zusammenhang haben sich kraftfahrzeugtechnische Clip-Verbindungselemente als besonders geeignet erwiesen, weil mit ihrer Hilfe die drehgelenkige oder auch drehfeste Kopplung der Hebel untereinander besonders einfach und schnell vorgenommen werden kann.

Beispielsweise wird in der gattungsbildenden DE 295 13 908 U1 unter anderem die Verbindung zwischen einem Innenverriegelungshaupthebel und einem Schlossblech beschrieben. Zu diesem Zweck ist für die Lagerung des Innenverriegelungshaupthebels eine geschlitzte Lagerhülse und ein in die Lagerhülse einführbarer Spreizschaft mit Spreizschaftkopf vorgesehen. Auf diese Weise kann im Rahmen einer industriellen Serienfertigung auf einfache Weise die Montage des bekannten Kraftfahrzeugtürschlosses erfolgen.

Durch die DE 297 16 023 U1 ist ein Kraftfahrzeugtürschloss bekannt geworden, welches mit einem zwischen Schlossgehäuse und Schlossdeckel gelagerten Schlosshebel ausgerüstet ist. Zu diesem Zweck ist eine an dem Schlossgehäuse angeformte Lagerhülse und zusätzlich ein die Lagerhülse durchdringender Schaft vorgesehen. Der Schaft ist als Lagerschaft für die Lagerhülse ausgebildet und an dem Schlossdeckel angeformt. Zugleich fungiert der Lagerschaft als Verbindungsschaft für den Schlossdeckel und das Schlossgehäuse.

Durch die DE 10 2008 005 575 A1 ist ein Kraftfahrzeugschloss mit Schlossgehäuse bekannt geworden, bei dem ein Gehäuseboden und ein Gehäusedeckel in einer Vormontagestellung mithilfe zumindest eines flexibel ausgestalteten Verbindungselementes miteinander verbunden sind. Das Verbindungselement erstreckt sich zumindest bereichsweise im Wesentlichen parallel zur Ebene des Gehäusebodens und/oder des Gehäusedeckels. Außerdem ist das Verbindungselement plastisch oder elastisch verformbar ausgestaltet. Dazu ist das Verbindungselement vorteilhaft aus Kunststoff gefertigt. Auf diese Weise kann ein einfaches, kostensparendes und effizientes Zusammenfügen eines Schlossgehäuses für ein Kraftfahrzeugschloss zur Verfügung gestellt werden.

Weiterhin ist aus der US 2005/241118 A1 ein kraftfahrzeugtechnisches Clip-Verbindungselement mit den Merkmalen des Oberbegriffs des Anspruchs 1 bekannt. 11

Der Stand der Technik hat sich grundsätzlich bewährt, stößt allerdings bei der Montage und/oder der anschließenden Benutzung an Grenzen. Beispielsweise besteht bei der Montage das Problem, dass die den Spreizdorn hintergreifenden Spreizflügel brechen oder zumindest eine Materialschwächung aufweisen können. Diese Materialschwächung wird oftmals an einer fußseitigen Anbindung des betreffenden Spreizflügels beobachtet. Das gilt insbesondere für den Fall, dass die Clipverbindung bzw. der Spreizdorn und/oder die beiden Spreizflügel aus Kunststoff hergestellt sind. Tatsächlich neigen Kunststoffe bei einer Verformung über den elastischen Bereich hinaus zu Materialschwächungen aufgrund von Versprödung. Solche Versprödungen können auch durch zusätzliche Alterungseffekte begünstigt werden.

Hinzu kommt, dass die bekannten Clip-Verbindungselemente typischerweise mit gerade erstreckten Spreizflügeln arbeiten, die bei einer an den auf diese Weise verbundenen Hebeln angreifenden Kraft im Betrieb belastet werden können. Als Folge hiervon ist es möglich, dass sich die Spreizflügel verformen oder schlimmstenfalls einknicken oder abknicken. Dann ist die hergestellte Verbindung der beiden Bauteile respektive Hebel in ihrer Funktion gestört. Hier will die Erfindung insgesamt Abhilfe schaffen.

Der Erfindung liegt das technische Problem zugrunde, ein derartiges kraftfahrzeugtechnisches Clip-Verbindungselement so weiterzuentwickeln, dass die Montage vereinfacht und beschädigungsfrei erfolgt und zugleich Beschädigungen während des Betriebs vermieden werden.

Zur Lösung dieser technischen Problemstellung ist ein gattungsgemäßes kraftfahrzeugtechnisches Clip-Verbindungselement im Rahmen der Erfindung dadurch gekennzeichnet, dass das kraftfahrzeugtechnisches Clip-Verbindungselement weiterhin eine Abstützfläche aufweist und die Spreizflügel im Querschnitt bauchig und gering beabstandet zu der Abstützfläche ausgebildet sind.

Grundsätzlich kann es sich bei den mithilfe des kraftfahrzeugtechnischen Clip-Verbindungselementes gekoppelten Bauteilen anstelle von zwei miteinander drehbar oder drehfest gekoppelten Hebeln um eine Verbindung zwischen einem Hebel und beispielsweise einem Schlossgehäuse handeln. Auch die Verbindung eines Hebels und beispielsweise einer Abtriebscheibe eines elektromotorischen Antriebes kann in der beschriebenen Art und Weise realisiert und umgesetzt werden. In jedem Fall lassen sich die beiden mithilfe der erfindungsgemäßen Clip-Verbindung bzw. unter Rückgriff auf das Clip-Verbindungselement miteinander gekoppelten Bauteile unschwer herstellungstechnisch verbinden. Nach der Herstellung der Verbindung lassen sich die Bauteile grundsätzlich gegeneinander rotieren, sind also drehgelenkig miteinander verbunden. Im Regelfall erfolgt mithilfe des erfindungsgemäßen Clip-Verbindungselementes jedoch eine drehfeste Kopplung der besagten Bauteile.

Dabei sorgt der jeweilige und im Querschnitt bauchig ausgebildete Spreizflügel zunächst einmal dafür, dass bei der Montage des Clip-Verbindungselementes der Spreizdorn typischerweise erst mit dem Kopf des betreffenden Spreizflügels in Kontakt kommt, durch diesen aufgeweitet wird und dann rastend hintergreift. Zu diesem Zweck verfügt der Spreizdorn im Allgemeinen über einen den jeweiligen Spreizflügel im Montagezustand übergreifenden Kopf einerseits und einen sich an den Kopf anschließenden Schaft andererseits.

Der Kopf des Spreizdornes sorgt also durch seinen mechanischen Kontakt mit dem typischerweise in Richtung auf den Spreizdorn abgewickelten Kopf des jeweiligen Spreizflügels dafür, dass der Spreizflügel aufschwenkt und dann in der Montagestellung den Kopf des Spreizdornes hintergreift. Da dieser beschriebene Verformungsvorgang des Spreizflügels mithilfe des Spreizdornes unter Berücksichtigung eines großen Hebelarmes erfolgt, nämlich von der fußseitigen Anbindung des Spreizflügels ausgehend bis hin zu dessen Kopf, werden insgesamt geringe Kräfte beim Fügen der erfindungsgemäßen Clip-Verbindung beobachtet. Zugleich geht hiermit eine relativ geringe Verformung des betreffenden Spreizflügels an seiner fußseitigen Anbindung einher, welche etwaige Materialschwächungen in diesem Bereich verhindert.

Typischerweise geht die Erfindung hierbei von der Erkenntnis aus, dass das kraftfahrzeugtechnische Clip-Verbindungselement insgesamt aus Kunststoff hergestellt ist. D. h., sowohl der Spreizdorn als auch die wenigstens zwei den Spreizdorn im Montagezustand rastend hintergreifenden Spreizflügel sind jeweils aus Kunststoff gefertigt. Die Spreizflügel sind dabei im Allgemeinen an eines der beiden zu koppelnden Bauteile angeformt. Der Spreizdorn findet sich demgegenüber am anderen korrespondierenden Bauteil. Sofern beide Bauteile aus Kunststoff hergestellt sind und beispielsweise als Kunststoffspritzgussteile ausgeführt sind, lassen sich an den betreffenden Bauteilen einerseits der Spreizdorn und andererseits die Spreizflügel unschwer realisieren und definieren. Die Kopplung der Bauteile untereinander kann auf diese Weise einfach durch die beschriebene Clip-Verbindung erfolgen, indem die beiden Spreizflügel gleichsam über den Spreizdorn bzw. dessen Kopf axial geschoben werden, bis der Kopf des Spreizdornes die Spreizflügel übergreift und auf diese Weise die beiden miteinander zu koppelnden Bauteile verbunden sind.

Der bereits beschriebene und im Querschnitt bauchige Charakter der betreffenden Spreizflügel sorgt dafür, dass etwaige Materialschwächungen des Spreizflügels im Bereich seiner fußseitigen Anbindung an das hiermit ausgerüstete Bauteil reduziert bzw. gänzlich im Rahmen der Erfindung unterbunden werden. Die zusätzlich und erfindungsgemäß vorgesehene Abstützfläche sorgt nun neben diesen Montageerleichterungen dafür, dass etwaige die beiden auf diese Weise miteinander gekoppelten Bauteile beaufschlagende Trennkräfte nicht zu einer Beschädigung der realisierten Clip-Verbindung führen. Denn der Abstand des betreffenden Spreizflügels zu der Abstützfläche ist in der Regel so bemessen, dass eine angreifende Zugkraft nicht zu einer Beschädigung der Spreizflügel führt. Tatsächlich korrespondiert eine solche Zugkraft nämlich dazu, dass der Spreizdorn mit seinem Kopf die Spreizflügel axial beaufschlagt, sodass sich die beiden Spreizflügel aufweiten. Einer solchen Aufweitung der Spreizflügel wirkt jedoch die Abstützfläche entgegen. Denn die Abstützfläche ist zu dem betreffenden Spreizflügel gering beabstandet und eine Aufweitung der Spreizflügel durch eine an der Clip-Verbindung angreifende Zugkraft führt ab einer bestimmten Größe der Zugkraft dazu, dass sich die Spreizflügel infolge ihrer im Querschnitt bauchigen Form gegen die Abstützfläche anlegen und sich gegenüber der Abstützfläche abstützen.

Zu diesem Zweck ist die Abstützfläche im Allgemeinen bogenförmig ausgebildet. Außerdem hat es sich in diesem Zusammenhang bewährt, wenn eine insgesamt rotationssymmetrische Ausgestaltung beobachtet wird. Dazu sind die Spreizflügel im Allgemeinen rotationssymmetrisch im Vergleich zum eine Rotationssymmetrieachse definierenden Spreizdorn ausgelegt. D. h., der Spreizdorn definiert die zugehörige Rotationssymmetrieachse.

Die Abstützfläche ist nun im Allgemeinen kreisbogenförmig in Bezug auf den Spreizdorn als Rotationssymmetrieachse ausgebildet. Da darüber hinaus die Abstützfläche vorteilhaft eine an einen maximalen Abstand des bauchigen Spreizflügels zum Spreizdorn angepasste Bauhöhe aufweist, kommt es bei einer Aufweitung der beiden Spreizflügel infolge einer an den miteinander verbundenen Bauteilen angreifenden Zugkraft dazu, dass sich die beiden im Querschnitt bauchigen Spreizflügel praktisch gleichzeitig an die die Spreizflügel kreisbogenförmig umgebende Abstützfläche anlegen. Dadurch wird die fragliche Zugkraft letztlich in die Abstützfläche abgeleitet und ein Ein- oder Abknicken der Spreizflügel wirksam verhindert.

Die beiden auf diese Weise miteinander gekoppelten Bauteile lassen sich dadurch praktisch nur gewaltsam voneinander trennen, indem der Spreizdorn und/oder einer oder mehrere Spreizflügel abgeschert werden. Meistens sind an dieser Stelle wenigstens drei gleichmäßig über den Umfang verteilt angeordnete Spreizflügel vorgesehen. Außerdem ist die Auslegung so getroffen, dass der jeweilige Spreizflügel im Querschnitt seinen maximalen Abstand zum Spreizdorn in etwa auf halber Länge aufweist. D. h., das Maximum der bauchigen Form des Spreizflügels im Querschnitt findet sich auf halbem Weg zwischen seiner fußseitigen Anbindung und dem Kopf.

Wie zuvor bereits erläutert, weist der jeweilige Spreizflügel einen in Richtung auf den Spreizdorn abgewinkelten Kopf auf. Dadurch kann sich der abgewinkelte Kopf bei einer etwaigen auf den Spreizdorn wirkenden Zugkraft in Richtung auf den Spreizdorn verformen. Der Kopf des Spreizflügels mag sich dabei an den Schaft des Spreizdornes unterhalb seines Kopfes anlegen und auf diese Weise für eine zweite Anlage sorgen, und zwar ergänzend zur Anlage des jeweiligen Spreizflügels an der Abstützfläche.

Im Ergebnis wird ein kraftfahrzeugtechnisches Clip-Verbindungselement zur Verfügung gestellt, welches eine einfache Montage mit einer zugleich verbesserten Funktionalität verbindet. Das lässt sich durch die Kombination des im Querschnitt des Spreizflügels umgesetzten bauchigen Charakters i. V. m. seiner geringen Beabstandung zu der Abstützfläche erreichen. Tatsächlich sorgt der bauchige Charakter dafür, dass an der fußseitigen Anbindung des betreffenden Spreizflügels etwaige Materialschwächungen nicht beobachtet werden und zugleich die Clip-Verbindung kraftarm hergestellt werden kann. Die Abstützfläche stellt dann im Betrieb sicher, dass ein Einknicken oder Abknicken der betreffenden Spreizflügel vermieden wird. Hierin sind die wesentlichen Vorteile zu sehen.

Im Folgenden wird die Erfindung anhand einer lediglich ein Ausführungsbeispiel darstellenden Zeichnung näher erläutert, es zeigen:
- Fig. 1: eine Clip-Verbindung von zwei Hebeln mithilfe des erfindungsgemäßen Clip-Verbindungselementes,
- Fig. 2: den Gegenstand nach der Fig. 1 im Bereich des Clip-Verbindungselementes sowie
- Fig. 3 und 4: die Darstellung nach der Fig. 2 mit zusätzlich angedeuteten Kräften und Hebelverhältnissen.

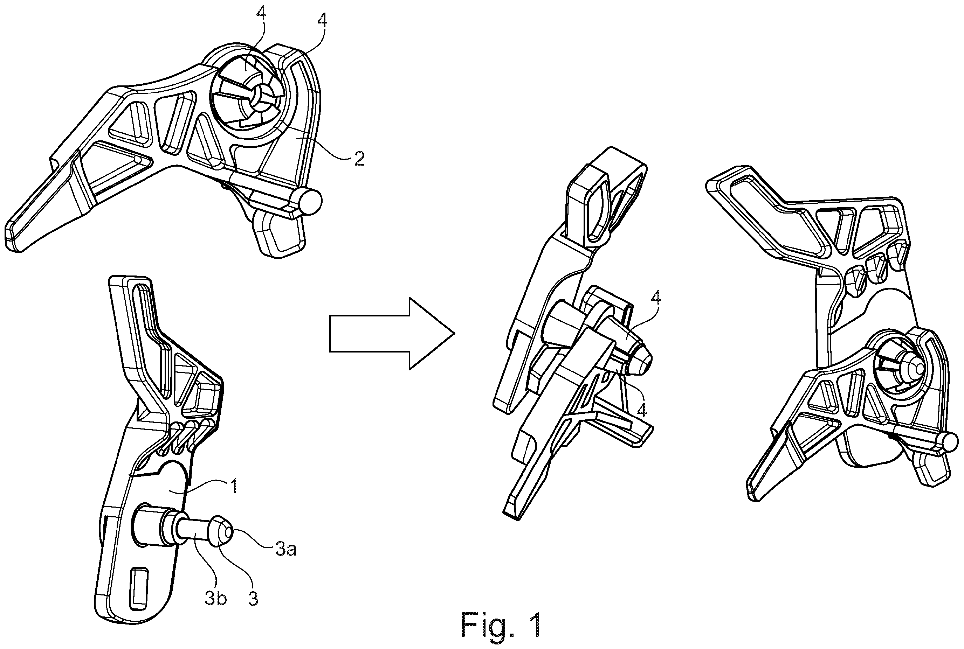

In den Figuren ist ein kraftfahrzeugtechnisches Clip-Verbindungselement dargestellt. Tatsächlich handelt es sich um ein Clip-Verbindungselement zur Kopplung von Bauteilen 1, 2 eines Kraftfahrzeugschlosses, vorliegend eines Kraftfahrzeugtürschlosses. Bei den Bauteilen 1, 2 handelt es sich im Rahmen der Darstellung nach der Fig. 1 um zwei Hebel 1, 2 einer Hebelkette im Innern des Kraftfahrzeugschlosses bzw. Kraftfahrzeugtürschlosses. Bei den beiden Hebeln 1, 2 handelt es sich jeweils um Hebel 1, 2 einer Verriegelungshebelkette, beispielsweise einen Verriegelungshebel bzw. Verriegelungshaupthebel und einen Innenverriegelungshebel. Beide Hebel 1, 2 sind nach dem Ausführungsbeispiel als Kunststoffhebel ausgeführt.

Das Clip-Verbindungselement nach der Erfindung setzt sich im Wesentlichen aus einem Spreizdorn 3 sowie wenigstens zwei den Spreizdorn 3 im Montagezustand rastend hintergreifenden Spreizflügeln 4 zusammen. Nach dem Ausführungsbeispiel ist der Spreizdorn 3 an den Hebel 1 angeformt. Demgegenüber finden sich die wenigstens zwei mit dem Spreizdorn 3 wechselwirkenden Spreizflügel 4 an dem anderen Hebel 2.

Anhand der Fig. 1 erkennt man, dass insgesamt vier Spreizflügel 4 an dem Hebel 2 vorgesehen sind bzw. an den Hebel 2 angeformt sind, und zwar gleichmäßig über den Umfang verteilt angeordnet. Tatsächlich beschreiben die Spreizflügel 4 insgesamt eine hohlzylindrische Aufnahme für den hierin einsteckbaren und durchsteckbaren Spreizdorn 3.

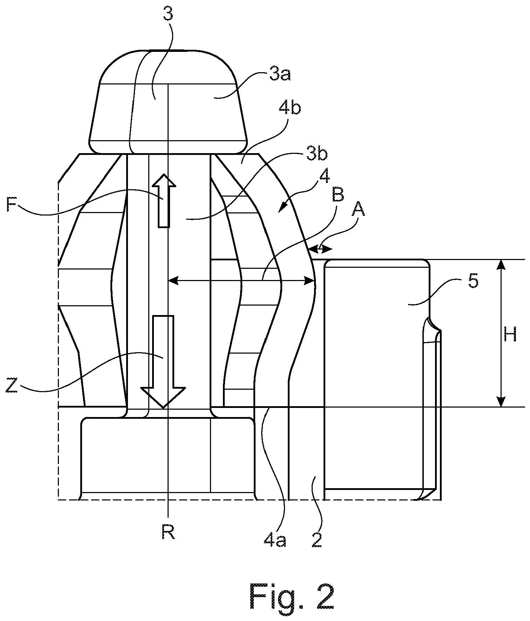

Die beiden Hebel 1, 2 werden so miteinander vereinigt bzw. gekoppelt, dass der Hebel 1 mit dem daran angeformten Spreizdorn 3 in die von den Spreizflügeln 4 am anderen Hebel 2 definierte hohlzylindrische Aufnahme eingesteckt wird, wie man anhand der Fig. 1 nachvollziehen kann. Hierbei wird der Spreizdorn 3 mit seinem frontseitigen Kopf 3a voraus in die von den Spreizflügeln 4 gebildete hohlzylindrische Aufnahme eingesteckt. Bei einem Vergleich der Figuren 1 und 2 erkennt man, dass bei einem solchen Fügevorgang mit der in der Fig. 2 dargestellten Fügekraft F der Kopf 3a des Spreizdornes 3 dafür sorgt, dass die Spreizflügel 4 zunächst aufgebogen werden und dann den Kopf 3a des Spreizdornes 3 hintergreifen und sich an einen den Kopf 3a tragenden Schaft 3b anlegen.

Wie in der allgemeinen Beschreibung bereits erläutert, können die beiden Hebel 1, 2 nach ihrer Verbindung grundsätzlich gegeneinander rotieren, sind also drehgelenkig miteinander verbunden. Im Regelfall wird jedoch eine drehfeste Kopplung der beiden Bauteile bzw. Hebel 1, 2 realisiert und umgesetzt. Zu diesem Zweck können fußseitig des Spreizdornes 3 ein oder mehrere nicht ausdrücklich dargestellte Radialstege vorgesehen werden. Der eine oder die mehreren Radialstege mögen mit einem oder mehreren korrespondierend gestalteten Radialstegen unterhalb oder an den Spreizflügeln 4 wechselwirken. Auf diese Weise können die beiden Bauteile bzw. Hebel 1, 2 nur in bestimmten und durch die jeweiligen Radialstege festgelegten Winkelpositionen zueinander mit Hilfe des Clip-Verbindungselementes gekoppelt werden, und zwar drehfest.

Erfindungsgemäß sind die jeweiligen Spreizflügel 4 im Querschnitt bauchig ausgelegt, wie man insbesondere in den Figuren 2 bis 4 nachvollziehen kann. Dadurch weisen die Spreizflügel einen geringen radialen Abstand A zu einer Abstützfläche 5 auf. Der Abstand A der Spreizflügel 4 zu der Abstützfläche 5 ist dabei so bemessen, dass eine an den beiden miteinander gekoppelten Bauteilen 1, 2 bzw. dem Spreizdorn 3 angreifende und in der Fig. 2 angedeutete Zugkraft Z nicht zu einer Beschädigung der Spreizflügel 4 führt. Denn ab einer bestimmten Größe der Zugkraft Z legen sich die Spreizflügel 4 unter Überwindung des Abstandes A an die Abstützfläche 5 an. D. h., der Abstand A der Spreizflügel 4 zur Abstützfläche 5 ist so bemessen, dass die angreifende Zugkraft Z nicht zu einer Beschädigung der Spreizflügel 4 führt.

Anhand der Darstellungen erkennt man, dass die Abstützfläche 5 insgesamt in Aufsicht bogenförmig und insbesondere kreisbogenförmig ausgebildet ist. Dabei fungiert der Spreizdorn 5 als Rotationssymmetrieachse R bzw. läuft die Rotationssymmetrieachse R durch den Spreizdorn 3. Außerdem fällt der Mittelpunkt der kreisbogenförmigen Abstützfläche 5 mit der fraglichen Rotationssymmetrieachse R zusammen. Darüber hinaus verfügt die Abstützfläche 5 über eine Bauhöhe H ausgehend von einer fußseitigen Anbindung 4a des Spreizflügels 4 an den Hebel 2 im Beispielfall. Diese Höhe H ist an einen maximalen radialen Abstand B des Spreizflügels 4 vom Spreizdorn 3 bzw. der Rotationssymmetrieachse R angepasst. Dieser maximale Abstand B des Spreizflügels 4 vom Spreizdorn 3 in der in der Fig. 2 dargestellten Montagestellung findet sich in etwa auf halber Länge des betreffenden Spreizflügels 4 ausgehend von der fußseitigen Anbindung 4a des Spreizflügels 4 bis hin zu seinem Kopf 4b.

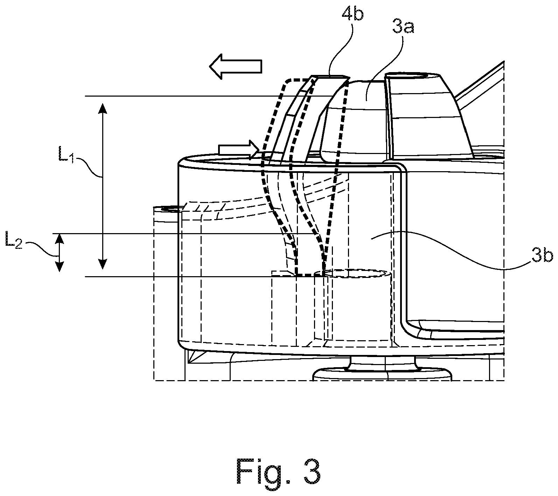

Die Höhe H der bogenförmigen bzw. kreisbogenförmigen Abstützfläche 5 ist nun an die axiale Position dieses maximalen Abstandes B im Vergleich zum Spreizdorn 3 angepasst bzw. geringfügig größer als der Abstand dieser axialen Position von der fußseitigen Anbindung 4a ausgelegt. Dadurch wird erfindungsgemäß sichergestellt, dass bei einer Beaufschlagung der Clip-Verbindung mit der Zugkraft Z sich der jeweilige Spreizflügel 4 an die Abstützfläche 5 anlegt. Das ist Folge einer den Spreizflügel 4 aufweitenden und in der Fig. 3 dargestellten Kraft, sodass der betreffende Spreizflügel 4 hierbei die in der Fig. 3 gestrichelt dargestellte verformte Position einnimmt. Anhand dieser Darstellung erkennt man auch, dass beim Fügevorgang der Kopf 3a des Spreizdornes 3 erst am Kopf 4b des auf diese Weise jeweils aufgeweiteten Spreizflügels 4 angreift, sodass im Vergleich zur fußseitigen Anbindung 4a des betreffenden Spreizflügels 4 ein langer Hebelarm L₁ beobachtet wird. Dieser lange Hebelarm L₁ ist deutlich größer als ein ebenfalls in der Fig. 3 eingezeichneter kurzer Hebelarm L₂, welcher sich für den Fall einstellt, dass der Spreizflügel 4 alternativ die ebenfalls in der Figur eingezeichnete herkömmliche gerade Form aufweist.

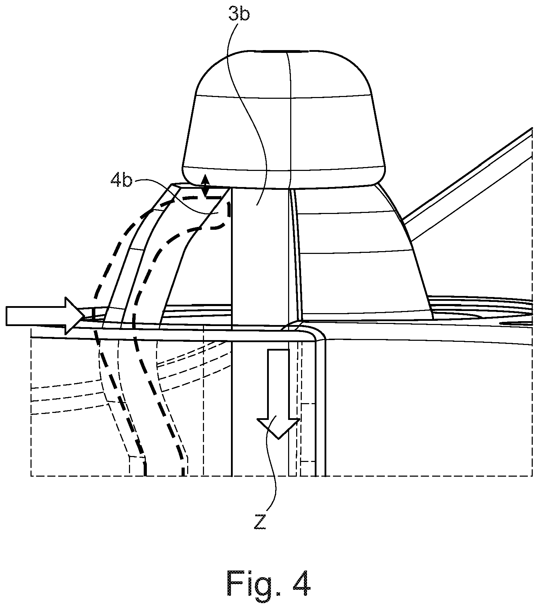

Anhand der Fig. 4 erkennt man schließlich, dass bei einer Deformation der Spreizflügel 4 infolge der angreifenden Zugkraft Z der abgewinkelte Kopf 4b des betreffenden Spreizflügels 4 gegen den Schaft 3b des Spreizdornes 3 fährt. Dadurch wird eine zweite Auf- bzw. Anlage des Spreizflügels 4 zur Verfügung gestellt, und zwar einerseits gegenüber der Stützfläche 5 und andererseits an dem Spreizdorn 3.

### Bezugszeichenliste:

- 1, 2: Bauteil bzw. Hebel
- 3: Spreizdorn
- 3a: frontseitiger Kopf
- 3b: tragender Schaft
- 4: Spreizflügel
- 4a: fußseitige Anbindung
- 4b: abgewinkelte Kopf
- 5: Abstützfläche
- A: Abstand
- B: Abstand
- F: Fügekraft
- H: Bauhöhe
- L: Hebelarm
- R: Rotationssymmetrieachse
- Z: Zugkraft

## Patentansprüche

1. Kraftfahrzeugtechnisches Clip-Verbindungselement, insbesondere Clip-Verbindungselement zur Kopplung von Bauteilen eines Kraftfahrzeugschlosses, vorzugsweise Kraftfahrzeugtürschlosses, mit einem Spreizdorn (3) sowie wenigstens zwei den Spreizdorn (3) im Montagezustand rastend hintergreifenden Spreizflügeln (4),
**dadurch gekennzeichnet, dass**
das kraftfahrzeugtechnisches Clip-Verbindungselement weiterhin eine Abstützfläche (5) aufweist und die Spreizflügel (4) im Querschnitt bauchig und gering beabstandet zu der einer Abstützfläche (5) ausgebildet sind.

2. Verbindungselement nach Anspruch 1, **dadurch gekennzeichnet, dass** der Abstand (A) zur Abstützfläche (5) so bemessen ist, dass eine angreifende Zugkraft (Z) nicht zu einer Beschädigung der Spreizflügel (4) führt.

3. Verbindungselement nach Anspruch 1 oder 2, **dadurch gekennzeichnet, dass** die Abstützfläche (5) bogenförmig ausgebildet ist.

4. Verbindungselement nach Anspruch 3, **dadurch gekennzeichnet, dass** die Spreizflügel (4) rotationssymmetrisch im Vergleich zum eine Rotationssymmetrieachse (R) definierenden Spreizdorn (3) ausgelegt sind.

5. Verbindungselement nach einem der Ansprüche 1 bis 4, **dadurch gekennzeichnet, dass** die Abstützfläche (5) kreisbogenförmig in Bezug auf den Spreizdorn (3) als Rotationssymmetrieachse (R) ausgebildet ist.

6. Verbindungselement nach einem der Ansprüche 1 bis 5, **dadurch gekennzeichnet, dass** die Abstützfläche (5) eine an einen maximalen Abstand (B) des bauchigen Spreizflügels (4) zum Spreizdorn (3) angepasste Bauhöhe (H) aufweist.

7. Verbindungselement nach einem der Ansprüche 1 bis 6, **dadurch gekennzeichnet, dass** der Spreizdorn (3) einen die Spreizflügel (4) übergreifenden Kopf (3a) und einen sich daran anschließenden Schaft (3b) aufweist.

8. Verbindungselement nach einem der Ansprüche 1 bis 7, **dadurch gekennzeichnet, dass** wenigstens drei gleichmäßig über den Umfang verteilt angeordnete Spreizflügel (4) vorgesehen sind.

9. Verbindungselement nach einem der Ansprüche 1 bis 8, **dadurch gekennzeichnet, dass** der jeweilige Spreizflügel (4) im Querschnitt seinen maximalen Abstand (B) zum Spreizdorn (3) in etwa auf halber Länge aufweist.

10. Verbindungselement nach einem der Ansprüche 1 bis 9, **dadurch gekennzeichnet, dass** der jeweilige Spreizflügel (4) einen in Richtung auf den Spreizdorn (3) abgewinkelten Kopf (4b) aufweist.

## Claims

1. Motor-vehicle clip-connection element, in particular a clip-connection element for coupling components of a motor vehicle latch, preferably a motor vehicle door latch, comprising an expansion mandrel (3) and at least two expansion fins (4) which engage in a ratcheting manner behind the expansion mandrel (3) in the assembled state,
**characterized in that**
the motor-vehicle clip-connection element further comprises a support surface (5) and the expansion fins (4) have a bulbous cross section and are slightly spaced apart from the supporting surface (5).

2. Connection element according to claim 1, **characterized in that** the distance (A) from the support surface (5) is dimensioned such that an acting tensile force (Z) does not lead to damage to the expansion fins (4).

3. Connection element according to either claim 1 or 2, **characterized in that** the support surface (5) is arcuate.

4. Connection element according to claim 3, **characterized in that** the expansion fins (4) are designed rotationally symmetrically in relation to the expansion mandrel (3) that defines a rotational symmetry axis (R).

5. Connection element according to any of claims 1 to 4, **characterized in that** the support surface (5) is designed in the shape of a circular arc with respect to the expansion mandrel (3) as a rotational symmetry axis (R).

6. Connection element according to any of claims 1 to 5, **characterized in that** the support surface (5) has a height (H) adapted to a maximum distance (B) of the bulbous expansion fin (4) from the expansion mandrel (3).

7. Connection element according to any of claims 1 to 6, **characterized in that** the expansion mandrel (3) has a head (3a) extending over the expansion fins (4) and a shank (3b) adjoining said head.

8. Connection element according to any of claims 1 to 7, **characterized in that** at least three expansion fins (4) are provided which are distributed uniformly over the circumference.

9. Connection element according to any of claims 1 to 8, **characterized in that,** in cross section, each expansion fin (4) has its maximum distance (B) from the expansion mandrel (3) approximately at the midpoint of the length.

10. Connection element according to any of claims 1 to 9, **characterized in that** each expanding wing (4) has a head (4b) which is angled toward the expanding mandrel (3).

## Revendications

1. Élément de raccordement d'attache pour véhicule automobile, en particulier élément de raccordement d'attache pour accoupler des composants d'une serrure de véhicule automobile, de préférence une serrure de portière de véhicule automobile, comportant un mandrin extensible (3) ainsi qu'au moins deux pattes extensibles (4) qui viennent en prise par encliquetage derrière le mandrin extensible (3) lorsqu'elles sont assemblées,
**caractérisé en ce que**
l'élément de raccordement d'attache pour véhicule automobile présente en outre une surface de support (5), et les pattes extensibles (4) présentent une section transversale incurvée et sont légèrement espacées de la surface de support (5).

2. Élément de raccordement selon la revendication 1, **caractérisé en ce que** l'espacement (A) par rapport à la surface de support (5) est dimensionné de sorte qu'une force de traction (Z) agissante n'entraîne pas un endommagement des pattes extensibles (4).

3. Élément de raccordement selon la revendication 1 ou 2,
**caractérisé en ce que** la surface de support (5) est en forme d'arc.

4. Élément de raccordement selon la revendication 3, **caractérisé en ce que** les pattes extensibles (4) sont conçues symétriques en rotation par rapport au mandrin extensible (3) définissant un axe de symétrie de rotation (R).

5. Élément de raccordement selon l'une des revendications 1 à 4,
**caractérisé en ce que** la surface de support (5) est réalisée en arc de cercle par rapport au mandrin extensible (3) comme axe de symétrie de rotation (R).

6. Élément de raccordement selon l'une des revendications 1 à 5,
**caractérisé en ce que** la surface de support (5) présente une hauteur d'installation (H) adaptée à un espacement (B) maximal entre la patte extensible (4) incurvée et le mandrin extensible (3).

7. Élément de raccordement selon l'une des revendications 1 à 6,
**caractérisé en ce que** le mandrin extensible (3) présente une tête (3a) qui recouvre la patte extensible (4) et une tige (3b) se raccordant immédiatement à la tête.

8. Élément de raccordement selon l'une des revendications 1 à 7,
**caractérisé en ce qu'**au moins trois pattes extensibles (4) disposées de manière répartie uniformément sur la circonférence sont prévues.

9. Élément de raccordement selon l'une des revendications 1 à 8,
**caractérisé en ce que** chaque patte extensible (4) présente, en section transversale, son espacement (B) maximal par rapport au mandrin extensible (3), à peu près à mi-longueur.

10. Élément de raccordement selon l'une des revendications 1 à 9,
**caractérisé en ce que** chaque patte extensible (4) présente une tête (4b) coudée dans la direction du mandrin extensible (3).
